# EUROPEAN PATENT SPECIFICATION

(11) **EP 4 316 990 B1**
(45) Date of publication and mention of the grant of the patent: **06.05.2026**
(21) Application number: 23189576.4
(22) Date of filing: 03.08.2023
(51) Int. Cl.: B64D 29/06, E05B 63/06, E05C 19/14, E05B 63/00

(54) **ADJUSTABLE LATCH HOOK WITH INDEXING BEARING BLOCK**
EINSTELLBARER HAKEN MIT INDEXIERENDEM LAGERBOCK
CROCHET DE VERROUILLAGE RÉGLABLE AVEC BLOC DE PALIER D'INDEXATION

(30) Priority: 03.08.2022 IN 202211044443
(43) Date of publication of application: 07.02.2024
(73) Proprietor: Rohr, Inc., Chula Vista, CA 91910-2098 (US)
(72) Inventor: McMAHAN, Paul F., College Station 77840 (US); SHIVARUDRAPPA, Shashidhar, Bangalore 560040 (IN); MAHESHWARAPPA, Ramesh, Bangalore 560076 (IN); CHALLAMREDDY, Sangareddy, Bidar 585403 (IN); RASHID P, Muhammed, Kozhikode 673571 (IN)
(74) Representative: Dehns

(56) References cited:
- EP-A1- 3 907 139
- EP-A1- 4 019 720
- WO-A1-2017/156474
- WO-A1-2020/159920
- US-A1- 2015 259 957
- US-A1- 2022 194 612

## Description

### BACKGROUND OF THE INVENTION

### 1. Technical Field

The present disclosure relates generally to latch handle assemblies capable of being used in an aircraft and, more particularly, to adjustable latch hooks for latch handle assemblies.

### 2. Background Information

Latch assemblies are commonly used in the nacelle of an aircraft, for example, in fan cowls that enclose the engine fan case. Fan cowls are hinged to the pylon or to a frame structure attached at the top of the nacelle. Aircraft fan cowls are often held together with latch assemblies at various axial positions along the fan case. Fan cases may be encased by a fan cowl having two members, which fan cowl members may be joined together with a latch mechanism (e.g., at the bottom of the fan cowls). For example, a fan cowl may include a latch assembly at the bottom of the fan cowl to allow each fan cowl member to be pivoted between an open configuration and a closed configuration. The open configuration provides access into the nacelle (e.g., to the engine). In closed configuration, the fan cowl members are positioned to close access to the nacelle and provide an aerodynamic exterior surface. Due to build tolerance of the nacelle components, a fan cowl latch assembly is typically adjustable to fit each individual nacelle and to adjust for geometrical changes of the nacelle over time. Nacelle and fan cowl designs are often influenced by the size of the components that must be enclosed within the nacelle and fan cowl. A larger nacelle / fan cowl (e.g., one large enough to house conventional components) may provide disadvantages including aerodynamic drag, additional weight, and the like. Hence, in some instances there is a desire to utilize smaller and/or thinner configurations in the fan cowl region of the nacelle.

What is needed is a latch assembly that can be used in a variety of different nacelle configurations, including those that must be used in limited spaces.

EP 3 907 139 A1 discloses prior art systems and methods for latch hook length adjustment.

EP 4 019 720 A1 discloses a prior art encapsulated bearing block design for an adjustable hook latch.

WO 2017/156474 A1 discloses a prior art high offset hook latch.

WO 2020/159920 A1 discloses a prior art clevis-sensing adjustable hook latch.

US 2022/194612 A1 discloses a prior art adjustable hook latch mechanism.

### SUMMARY

According to a first aspect of the present invention, there is provided a latch hook adjustment assembly as set forth in claim 1.

According to a further aspect of the present invention, there is provided a latch mechanism as set forth in claim 5.

According to a further aspect of the present invention, there is provided an aircraft nacelle as set forth in claim 11.

Further embodiments are provided as set forth in dependent claims 2 to 4 and 6 to 10.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof as long as they fall within the scope of the appended claims. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a perspective view of an aircraft in accordance with various embodiments of the present disclosure.
FIG. 2 is a perspective view of a nacelle for an aircraft in accordance with various embodiments of the present disclosure.
FIG. 3 is a planar view of a present disclosure latch mechanism.
FIG. 4 is a side view of a present disclosure latch mechanism.
FIG. 5 is a side view of a portion of a present disclosure latch mechanism.
FIG. 6 is a partial perspective view of a portion of a present disclosure latch mechanism.
FIG. 7 is a sectional planar view of a portion of a present disclosure latch mechanism.
FIG. 8 is a perspective view of a present disclosure hook member having a bearing block disposed on the hook member shaft.
FIG. 9 is a perspective view of a present disclosure hook member having a nut disposed on the hook member shaft.
FIG. 10 is a perspective view of a present disclosure hook member having a bearing block, nut, and a spring member disposed on the hook member shaft.
FIG. 11 is a perspective view of a present disclosure bearing block.
FIG. 12 is a perspective view of a present disclosure nut.
FIG. 13 is a sectional view of a present disclosure nut.

### DETAILED DESCRIPTION

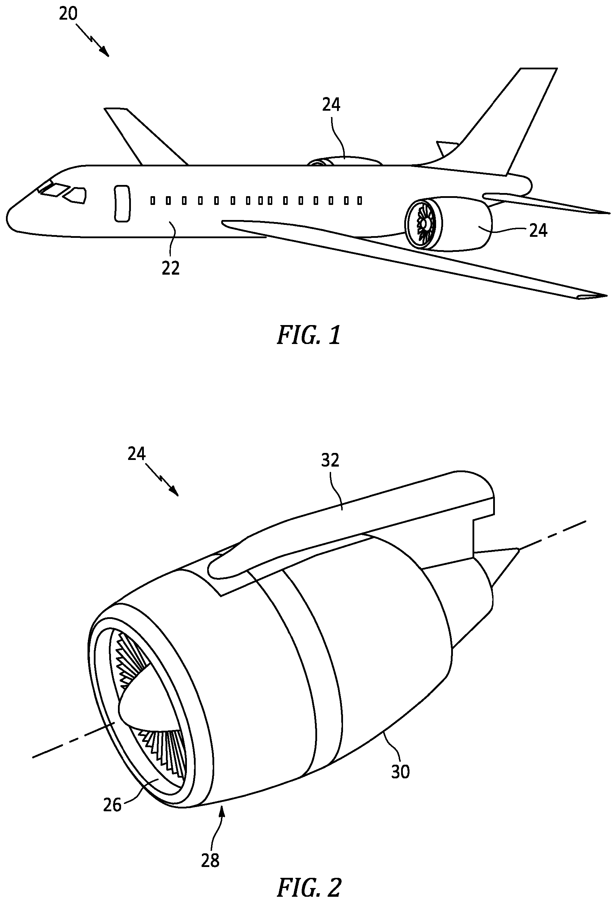

Aspects of the present disclosure include latch mechanisms that may be used in an aircraft fan cowl, an aircraft fan cowl that utilizes the present disclosure system, and an aircraft that utilizes the present disclosure system. FIG. 1 illustrates a conventional fixed wing aircraft 20 that may utilize embodiments of the present disclosure system. The aircraft includes a fuselage 22 and at least one nacelle 24.

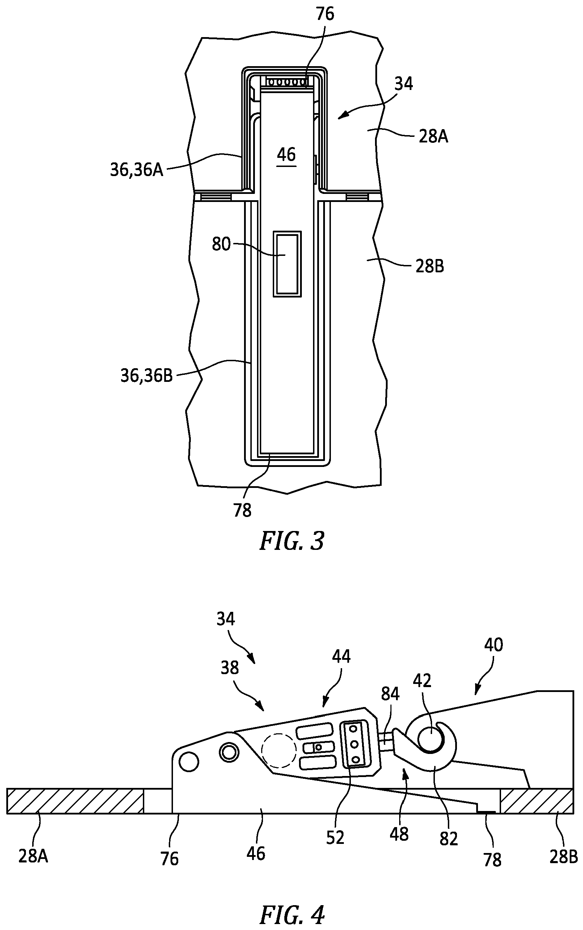

Referring to FIG. 2, a nonlimiting example of a nacelle 24 for an aircraft engine (e.g., a gas turbine engine) is shown. The nacelle 24 includes an inlet 26, a fan cowl 28, and a thrust reverser 30. The nacelle 24 may be attached to a pylon 32 that mounts the nacelle 24 to an aircraft wing or aircraft body. The nacelle 24 surrounds the engine providing smooth aerodynamic surfaces for airflow around and into the engine. The fan cowl 28 may include a first fan cowl member and a second fan cowl member. The first fan cowl member and the second fan cowl member may be pivotally attached (e.g., hinged) to the pylon 32 or to a frame structure attached at the gravitational top of nacelle 24. The nacelle 24 is disposed about an axial centerline that typically coincides with the axis of rotation of an engine housed within the nacelle 24. Each of the first and second fan cowl members may be pivoted between open positions (provides access into the interior of the nacelle; e.g., access to the oil tank, full authority digital engine control (FADEC), and other components) and a closed position where no interior access is permitted and the first and second fan cowl members are positioned as part of the aerodynamic shape of the nacelle exterior. One or more latch assemblies 34 (see FIG. 3) may be used to secure the first and second fan cowl members in the closed position and provide the mechanism for selectively releasing the first and second fan cowl members from the closed position so they may be rotated into the open positions. Latch mechanisms 34 are typically disposed on the gravitational bottom of the nacelle 24. FIG. 3 is a planar view illustrating a latch mechanism 34 retaining the first and second fan cowl members 28A, 28B in a closed position. As will be evident from the description herein, the latch mechanism 34 is configured to be flush relative to the first and second fan cowl members 28A, 28B when the first and second fan cowl members 28A, 28B are in the closed position for aerodynamic purposes.

Referring to FIGS. 3 and 4, embodiments of the latch mechanism 34 may include a latch housing 36, a latch hook adjustment assembly 38, and a latch keeper 40. The latch housing 36 includes a first latch housing unit 36A that is configured for attachment to the first fan cowl 28A, and a second latch housing unit 36B that is configured for attachment to the second fan cowl 28B; e.g., see FIG. 3. The latch keeper 40 is configured for attachment to second fan cowl 28B and includes a retaining member 42 that is configured (e.g., cylindrical) for engagement with a hook as will be described herein.

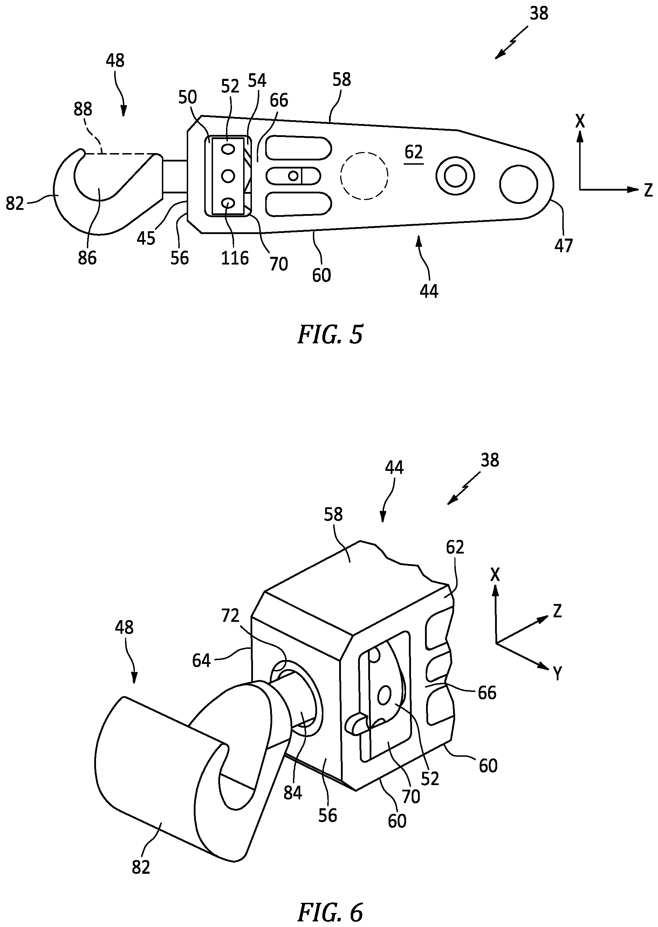

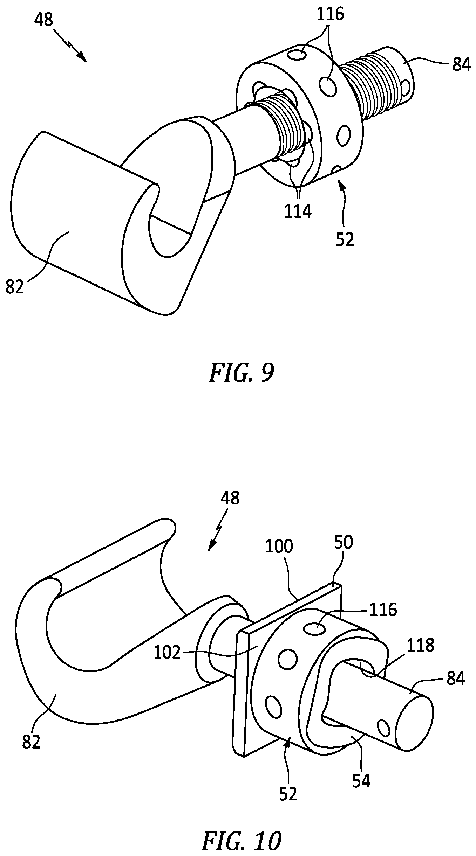

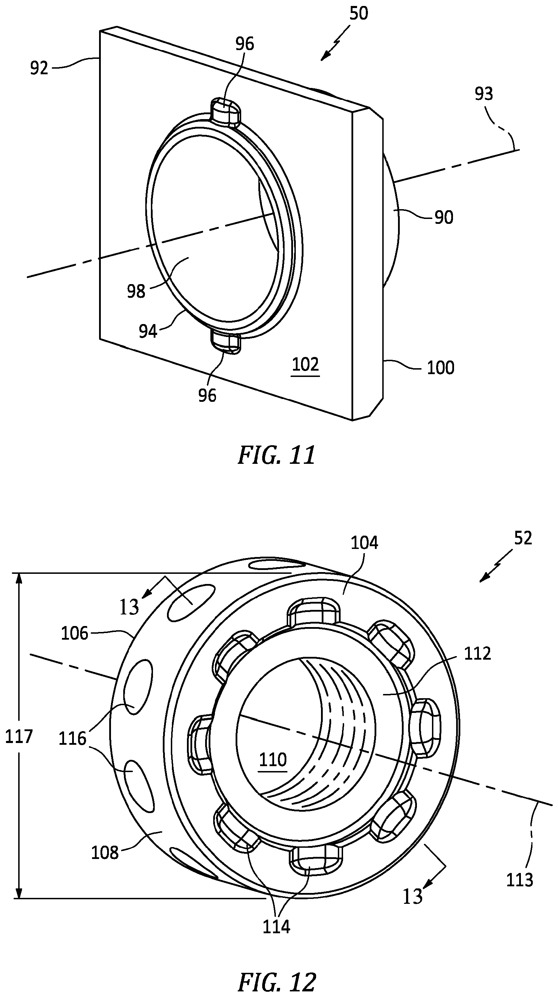

Referring to FIGS. 3-12, the latch hook adjustment assembly 38 includes a latch frame 44, a latch handle 46, a hook member 48, a bearing block 50 (e.g., see FIGS. 5 and 11), a nut 52, and a spring member 54 (e.g., see FIGS. 5 and 10).

Referring to FIGS. 5-7, the latch frame 44 extends lengthwise (e.g., extending in the Z-axis direction) between a front end 45 and an aft end 47. The latch frame 44 includes a front wall 56, a top wall 58, a bottom wall 60, a first side wall 62, a second side wall 64, and an interior wall 66. The top and bottom walls 58, 60 are spaced apart from one another heightwise (e.g., extending in the X-axis direction). The first and second side walls 62, 64 are spaced apart from one another laterally (e.g., extending in the Y-axis direction). The first and second side walls 62, 64 extend heightwise between the top and bottom walls 58, 60 for lengthwise portions of the latch frame 44. The front wall 56 extends heightwise between the top and bottom walls 58, 60 at the front end 45 of the latch frame 44. The interior wall 66 is lengthwise spaced apart from the front wall 56 and extends heightwise between the top and bottom walls 58, 60. The top and bottom walls 58, 60, the front wall 56, and the interior wall 66 define a forward cavity 70 that is open on at least one of the lateral side of the latch frame 44. As will be described further herein, the forward cavity 70 is configured to receive the nut 52, the bearing block 50, and the spring member 54. The front wall 56 includes a front wall aperture 72 and the interior wall 66 includes an interior wall aperture 74. The front wall aperture 72 and the interior wall aperture 74 are aligned with one another; e.g., they share a center axis. In an alternative configuration, the latch frame interior wall 66 may be two interior wall portions (e.g., a first interior wall portion extending downwardly from the top wall 58 and a second interior wall portion extending upwardly from the bottom wall 60, with a space disposed therebetween, or similar configuration.

Referring to FIGS. 3 and 4, the latch handle 46 extends lengthwise between a first lengthwise end 76 and a second lengthwise end 78. The latch handle 46 is pivotally attached to the first latch housing unit 36A proximate the first lengthwise end 76. As will be described below, to open the latch mechanism 34, the latch handle 46 is pivoted so that the second lengthwise end 78 is moving away from the second latch housing unit 36B and the second fan cowl member 28B. Conversely, to close the latch mechanism 34, the latch handle 46 is pivoted so that the second lengthwise end 78 is toward the second latch housing unit 36B and the second fan cowl member 28B.

In some embodiments, the latch handle 46 may include a lock mechanism (not shown) for maintaining the latch handle 46 in the closed position. The lock mechanism may be accessed through an aperture 80 disposed in the latch handle 46. To release the lock mechanism, a tool may be inserted into the aperture 80 to actuate the lock mechanism and thereby release the latch handle 46. Rotating the latch handle 46 into the closed position automatically actuates the lock mechanism to maintain the latch handle 46 in the closed position.

The hook member 48 includes a hook 82 and a shaft 84 attached to the hook 82. The shaft 84 extends outwardly from the hook 82. The hook 82 is configured for releasable engagement with the retaining member 42 of the latch keeper 40. The hook 82 has an interior region 86 with an opening 88. The interior region 86 is configured to receive and mate with the retaining member 42. The opening 88 is configured to permit the retaining member 42 to ingress and egress the hook interior region 86. The shaft 84 extends lengthwise between a first lengthwise end and a second lengthwise end. The hook 82 is attached to the first lengthwise end of the shaft 84. The shaft 84 includes an exterior surface 83. At least a portion of the shaft exterior surface 83 is threaded.

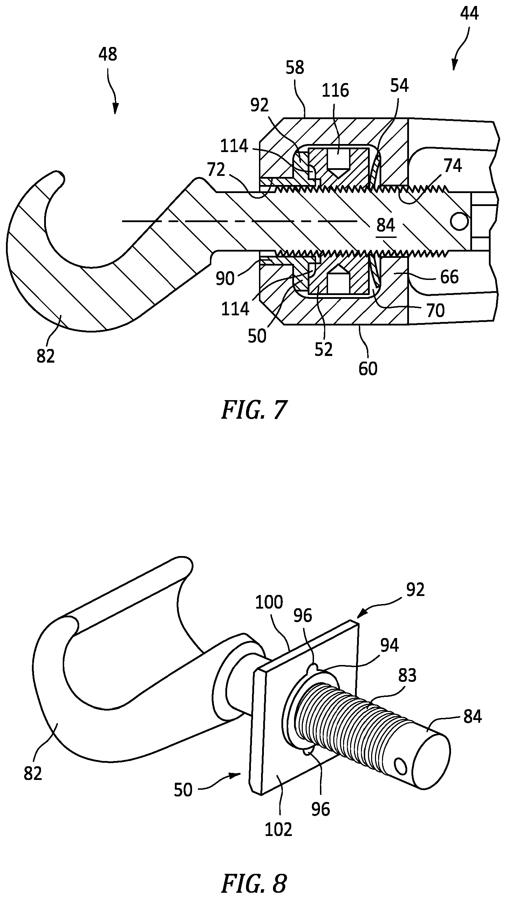

Referring to FIGS. 7, 8, and 11, the bearing block 50 includes a flange 92, and one or more indexing features 96. In some embodiments, the bearing block may also include a cylindrical sleeve 90 and a pilot boss 94. A bore 98 extends through the flange 92 and the cylindrical sleeve 90 and may be described as having a center axis 93. The flange 92 includes a first surface 100 and a second surface 102, wherein the second surface 102 is opposite the first surface 100. The cylindrical sleeve 90 is attached to and extends out from the flange first surface 100. The pilot boss 94 is attached to and extends out from the flange second surface 102, and is disposed at the periphery of the bore 98 that extends through the flange 92 and the cylindrical sleeve 90. The one or more indexing features 96 are male projections that extend out from the flange second surface 102. The one or more indexing features 96 are disposed in close proximity to the bore 98. In those embodiments that include a pilot boss 94, the indexing features 96 may be contiguous with the pilot boss 94 and extend a distance radially outward from the center axis of the bore. FIG. 11 shows a bearing block 50 embodiment having two indexing features 96. The present disclosure is not limited to any particular number of indexing features 96 (i.e., one or more) and not limited to their circumferential position. The indexing features 96 are configured to mate with index cavities 114 disposed in the nut 52 as will be described herein. Also as will be described herein, the mating geometry of the flange indexing features 96 and the nut index cavities 114 is such that the nut 52 can be rotated into an engagement position (i.e., where the indexing features 96 are received in respective nut index cavities 114) and out of the engagement position (i.e., where the indexing features 96 are not received in respective nut index cavities 114). As stated above, the bearing block 50 is configured to be received in the forward cavity 70 of the latch frame 44. The flange 92 is geometrically configured (e.g., a rectangular configuration) to prevent rotation of the bearing block 50 relative to the latch frame 44 when the bearing block 50 is received within the forward cavity 70 of the latch frame 44.

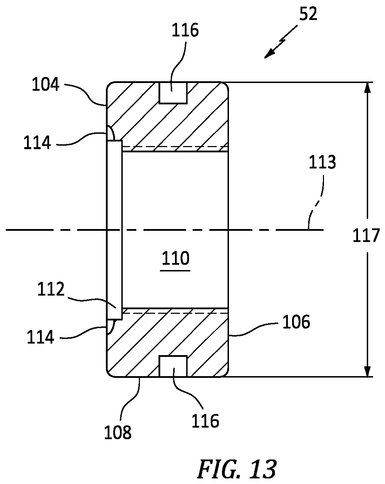

The nut 52 (see FIGS. 12 and 13) includes a first axial end surface 104, a second axial end surface 106, an outer radial surface 108, a bore 110, a plurality of index cavities 114, an outer diameter 117, and a center axis 113. In some embodiments, the nut 52 may include a pilot boss bore 112 and a plurality of engagement recesses 116. The outer radial surface 108 defines the nut 52 outer diameter. A portion or all of the bore 110 is threaded for engagement with the threads disposed on the exterior surface 83 of the hook member shaft 84. The outer radial surface 108 may extend between the first and second axial end surfaces 104, 106. The pilot boss bore 112 is disposed in the first axial end surface 104 and is contiguous with the nut bore 110. The pilot boss bore 112 is configured to receive the pilot boss 94 of the bearing block 50. The plurality of engagement recesses 116 are disposed in the outer radial surface 108 and are configured to permit engagement with tooling that can be used to rotate the nut 52. The plurality of index cavities 114 are disposed in the first axial end surface 104 and are in communication with (i.e., open to) the bore 110. In those embodiments that include a pilot boss bore 112, the plurality of index cavities 114 are also in communication with (i.e., open to) the pilot boss bore 112. The index cavities 114 are disposed for radial alignment with the indexing features 96 of the bearing block 50 (and vice versa) when the latch mechanism 34 is assembled. The index cavities 114 are configured to mate (e.g., male/female mating configuration) with the indexing features 96 of the bearing block 50. As described above, the male/female mating geometry of the nut index cavities 114 and the flange indexing features 96 is such that the nut 52 can be rotated into an engagement position (i.e., where the indexing features 96 are received in respective nut index cavities 114) and out of the engagement position (i.e., where the indexing features 96 are not received in respective nut index cavities 114). A nonlimiting example of a male/female mating geometry that may be used with the nut index cavities 114 and the flange indexing features 96 is an arcuate configuration (e.g., partially spherical) wherein each nut index cavity 114 has an arcuately configured void that can receive a projecting arcuately configured flange indexing feature 96. The term "mating" as used herein does not require that the female nut index cavity 114 mirror the projecting flange indexing feature 96. Mating female nut index cavities 114 and flange indexing features 96 may assume a variety of different configurations that create positive engagement when coupled to inhibit rotation of the nut 52 during use, but also allow rotation of the nut 52 (e.g., when the nut 52 is purposely being rotated for adjustment purposes). In some embodiments female nut index cavities 114 that mirror flange indexing features 96 may be preferred, but are not required.

The spring member 54 (e.g., see FIG. 10) may include a center aperture 118 for receiving the hook member shaft 84 and is configured to produce a biasing force while being elastically compressed. The spring member 54 may be configured as a wave spring. Other nonlimiting spring member 54 configurations include one or more coil springs, a slotted disk spring, a finger spring, a curved spring, and the like.

To facilitate a complete understanding of the present disclosure, the elements of the latch hook adjustment assembly 38 will now be described in assembled form. To begin, the bearing block 50 may be inserted into the latch frame 44. More specifically, the bearing block 50 may be inserted into the forward cavity 70 of the latch frame 44, with the cylindrical sleeve 90 being inserted into the front wall aperture 72. In the assembled form, the flange first surface 100 is disposed adjacent the inside surface of the front wall 56. Subsequently, the nut 52 may be inserted into the forward cavity 70 with the first axial surface 104 of the nut 52 facing the flange second surface 102 and the spring member 54 inserted between the nut 52 and the interior wall 66 of the latch frame 44. The front wall aperture 72, the bearing block bore 98, the nut bore 110, the center aperture 118 of the spring member 54, and the interior wall aperture 74 are aligned along a common axis.

The shaft 84 of the hook member 48 is inserted into the cylindrical sleeve 90 of the bearing block 50 (e.g., non-interference fit) until it engages with the nut 52. Upon engagement with the nut 52, the threaded portion of the hook member shaft 84 is threadedly engaged with the nut 52. As the hook member shaft 84 is threaded through the nut 52, the hook member shaft 84 extends through the center aperture 118 of the spring member 54 (e.g., non-interference fit) and the interior wall aperture 74 (e.g., non-interference fit). As will be detailed below, the axial travel of the hook member 48 relative to the latch frame 44 and the nut 52 provides adjustment for the latch mechanism 34.

As an example of operation of the present disclosure latch mechanism 34, the first and second fan cowl members 28A, 28B of a nacelle 24 may be rotated to a position that is near the closed position. The latch mechanism 34 may be actuated to permit the hook 82 of the hook member 48 to engage with the retaining member 42 of the latch keeper 40. Once the hook 82 is engaged with the retaining member 42, to complete the closing process the latch handle 46 is rotated (e.g., the second lengthwise end 78 of the latch handle 46 is rotated toward the second latch housing unit 36B and the second fan cowl member 28B) until the reaching the closed position where it may be retained by the lock mechanism if used. In this position, the flange indexing features 96 are received within the nut index cavities 114 and the nut 52 is inhibited from rotation as a result of that engagement. In addition, the latch mechanism 34 may be configured so that the spring member 54 applies some amount of biasing force against the nut 52 to facilitate maintaining engagement between the flange indexing features 96 and the nut index cavities 114.

In the event the user seeks to adjust the latch mechanism 34 (e.g., to change the axial position of the hook member 48 and therefore the closing of the first and second fan cowl members 28A, 28B), the user may rotate the nut 52 (which may require a tool). Rotation of the nut 52 will cause the flange indexing features 96 to disengage with the previously engaged nut index cavities 114 (i.e., move from a flange indexing feature 96 / nut index cavity 114 engagement position to a flange indexing feature 96 / nut index cavity 114 disengagement position). The movement from engagement to disengagement will cause axial movement of the nut 52 away from the bearing block flange 92 and will change the axial position of the hook member 48 (amount depending on amount of nut 52 rotation). The axial movement of the nut 52 relative to the bearing block flange 92 will cause compression of the spring member 54. Since the hook member shaft 84 is threadedly engaged with the nut 52 and the nut 52 is captured in the forward cavity 70 of the frame, the amount of axial hook member 48 adjustment desired will dictate how much rotation of the nut 52 is required. When the axial position of the hook member 48 has been adjusted to the desired degree, the nut 52 may be rotated to the nearest rotational position where flange indexing features 96 will once again be engaged with nut index cavities 114. As the nut 52 is rotated into the engaged position, the nut 52 will move axially toward the bearing block flange 92 and the compression of the spring member 54 will decrease.

A person of skill in the art will recognize that the environment in which latch mechanisms are disposed is a dirty environment where oils, direct, and other debris can accumulate on surfaces. As described above, the present disclosure latch mechanism utilizes a nut 52 having a detent or non-rotation capability provided by engagement features (i.e., nut index cavities 114) contiguous with an inner diameter of the nut 52. This configuration is understood to decrease the probability of such features (i.e., the nut index cavities 114) becoming clogged with debris, particularly relative to other latch mechanisms that utilize a nut 52 have detent cavities wholly disposed in an axially end face or disposed at the outer radial edge of a nut 52 which often has greater exposure to environmental elements.

The bearing block 50 and adjustment nut 52 combination of the present disclosure serve multiple functions that facilitate the operation of the present disclosure latch mechanism 34. For example, the cylindrical sleeve 90 portion of the bearing block 50 facilitates positioning of the bearing block 50 within the forward cavity 70 of the latch frame 44. The pilot boss 94 of the bearing block 50 facilitates positioning of the nut 52 relative to the bearing block 50. The cylindrical sleeve 90 portion of the bearing block 50 also facilitates engagement between the threaded portion of the hook member shaft 84 and the threaded portion of the nut bore 110; e.g., during assembly. The bearing block 50 and the nut 52 cooperate to prevent rotation of the nut (e.g., via the indexing features 96 and the index cavities 114) during use, but still allow rotation of the nut 52 for adjustment purposes. The bearing block flange 92 functions to distributes load applied to the nut 52 to the latch frame 44 (e.g., to the top wall 58 and the bottom wall 60).

Another significant aspect of the present disclosure relates to the indexing function provided by the indexing features 96 and the index cavities 114. The indexing features 96 and the index cavities 114 obviate the need for features (e.g., ball bearings disposed in a surface, and pockets disposed in an end face of a nut, separated from the bore of the nut). The present indexing features 96 and the index cavities 114 provide the desired indexing function (thereby preventing rotation of the nut during latch mechanism use) but also allow rotation of the nut 52 for adjustment purposes. Importantly, the indexing features 96 and the index cavities 114 are configured such that the index cavities 114 are contiguous with the pilot boss bore 112 and the indexing features 96 are positioned to engage with the index cavities 114 at this inwardly radial location. As stated above, this configuration facilitates avoiding debris clogging. Perhaps more importantly, the inwardly radial positioning of the indexing features 96 and the index cavities 114 permits the nut 52 to have a smaller outer diameter while still permitting full positional adjustment of the hook member 48 and still providing the anti-rotation capability. The smaller outer diameter of the nut 52, in turn, permits a smaller height latch frame 44 (i.e., the distance from the outer surface of the top wall 58 to the outer surface of the bottom wall 60). This results in a decreased overall height latch mechanism (e.g., along the X-axis), which is beneficial for nacelle applications with space limitations that require a smaller envelope latch mechanism 34.

While the principles of the disclosure have been described above in connection with specific apparatuses and methods, it is to be clearly understood that this description is made only by way of example and not as limitation on the scope of the claimed invention which is defined by the appended claims. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the claimed invention even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A latch hook adjustment assembly (38), comprising:
a latch frame (44) having a front wall (56) having a front wall aperture (72), an interior wall (66), and a forward cavity (70) disposed between the front wall (56) and the interior wall (66);
a pivotally mounted latch handle (46) that extends lengthwise between a first end and a second end in communication with latch frame (44);
a hook member (48) having an at least partially threaded shaft (84);
a bearing block (50) having a first side surface (100) and a second side surface (102), the first side surface (100) being opposite the second side surface (102), one or more indexing features (96), and a bearing block bore (98), wherein the one or more indexing features (96) project outwardly from the second side surface (102), and the bearing block bore (98) extends between the first side surface (100) and the second side surface (102), and the one or more indexing features (96) are disposed adjacent the bearing block bore (98); and
a nut (52) having a first axial end surface (104) and a second axial end surface (106), a nut bore (110) that extends through the first axial end surface (104) and the second axial end surface (106) and at least a portion of the nut bore (110) is configured for threaded engagement with the hook member shaft (84), and a plurality of index cavities (114) disposed in the first axial end surface (104) adjacent the nut bore (110); and
wherein the bearing block (50) and nut (52) are disposed in the forward cavity (70) of the latch frame (44), and the shaft (84) of the hook member (48) extends through the front wall aperture (72), the bearing block (50), and the nut (52), and the shaft (84) is in threaded engagement with the nut (52); and
the latch hook adjustment assembly (38) is disposable in an engaged configuration wherein the one or more indexing features (96) are engaged with the plurality of index cavities (114), and a disengaged configuration wherein the one or more indexing features (96) are disengaged with the plurality of index cavities (114);
**characterised in that** each index cavity (114) is open to the nut bore (110).

2. The latch hook adjustment assembly (38) of claim 1, wherein the bearing block (50) includes a pilot boss (94) extending outwardly from the second side surface (102) contiguous with the bearing block bore (98), and the nut (52) includes a pilot boss bore (112) disposed in the first axial end surface (104) contiguous with the nut bore (110), wherein the pilot boss bore (112) is configured to receive the pilot boss (94).

3. The latch hook adjustment assembly (38) of claim 2, wherein the plurality of indexing features (96) are contiguous with the pilot boss (94).

4. The latch hook adjustment assembly (38) of any of claims 1 to 3, wherein the bearing block (50) includes a sleeve (90) extending outwardly from the first side surface (100) and the bearing block bore (98) extends through the sleeve (90), wherein the sleeve (90) is configured to be receivable within the front wall aperture (72).

5. A latch mechanism (34), comprising:
a latch housing (36);
a latch keeper (40); and
the latch hook adjustment assembly (38) of claim 1 or 2, the assembly further comprising a spring member (54), wherein the spring member (54) is disposed in the forward cavity (70) of the latch frame (44), and the shaft (84) of the hook member (48) extends through the spring member (54).

6. The latch mechanism (34) of claim 5, wherein the one or more indexing features (96) are disposed for radial alignment with the plurality of index cavities (114).

7. The latch mechanism (34) of claim 5 or 6, wherein the plurality of index cavities (114) are configured to mate with the one or more indexing features (96).

8. The latch mechanism (34) of claim 7, wherein the mating configuration between the index cavities (114) and the one or more indexing features (96) permits the latch hook adjustment assembly (38) to be moved from said engaged configuration to said disengaged configuration by rotation of the nut (52).

9. The latch mechanism (34) of any of claims 5 to 8, wherein the latch frame (44) includes a top wall (58) and a bottom wall (60), wherein the front wall (56) extends between the top wall (58) and the bottom wall (60), and the interior wall (66) extends between the top wall (58) and the bottom wall (60), and the forward cavity (70) is defined by the front wall (56), top wall (58), the bottom wall (60), and the interior wall (66), and the interior wall (66) includes an interior wall aperture (74) aligned with the front wall aperture (72).

10. The latch mechanism (34) of any of claims 5 to 9, wherein the nut (52) includes an outer radial surface (108) and a plurality of engagement recesses (116) disposed in the outer radial surface (108).

11. An aircraft nacelle (24), comprising:
a fan cowl (28) having a first fan cowl member (28A) and a second fan cowl member (28B); and
a latch keeper (40) attached to the second fan cowl member (28B);
at least one latch hook adjustment assembly (38) as recited in any of claims 1 to 4, the latch hook adjustment assembly attached to the first cowl member.

## Patentansprüche

1. Riegelhakeneinstellbaugruppe (38), umfassend:
einen Riegelrahmen (44) aufweisend eine Vorderwand (56) mit einer Vorderwandöffnung (72), eine Innenwand (66) und einen Vorderhohlraum (70), der zwischen der Vorderwand (56) und der Innenwand (66) angeordnet ist;
einen schwenkbar gelagerten Riegelgriff (46), der sich der Länge nach zwischen einem ersten Ende und einem zweiten Ende erstreckt und mit dem Riegelrahmen (44) in Verbindung steht;
ein Hakenelement (48) mit einem zumindest teilweise mit Gewinde versehenen Schaft (84);
einen Lagerblock (50) aufweisend eine erste Seitenfläche (100) und eine zweite Seitenfläche (102), wobei die erste Seitenfläche (100) der zweiten Seitenfläche (102) gegenüberliegt, ein oder mehrere Indexiermerkmale (96) und eine Lagerblockbohrung (98), wobei die ein oder mehreren Indexiermerkmale (96) von der zweiten Seitenfläche (102) nach außen vorstehen und die Lagerblockbohrung (98) sich zwischen der ersten Seitenfläche (100) und der zweiten Seitenfläche (102) erstreckt und die ein oder mehreren Indexiermerkmale (96) benachbart zur Lagerblockbohrung (98) angeordnet sind; und
eine Mutter (52) aufweisend eine erste Axialendfläche (104) und eine zweite Axialendfläche (106), eine Mutterbohrung (110), die sich durch die erste Axialendfläche (104) und die zweite Axialendfläche (106) erstreckt, wobei zumindest ein Abschnitt der Mutterbohrung (110) für den Gewindeeingriff mit dem Hakenelement-Schaft (84) ausgelegt ist, und eine Vielzahl von Indexierhohlräumen (114), die in der ersten Axialendfläche (104) benachbart zur Mutterbohrung (110) angeordnet sind; und
wobei der Lagerblock (50) und die Mutter (52) in dem Vorderhohlraum (70) des Riegelrahmens (44) angeordnet sind und der Schaft (84) des Hakenelements (48) sich durch die Vorderwandöffnung (72), den Lagerblock (50) und die Mutter (52) erstreckt und der Schaft (84) in Gewindeeingriff mit der Mutter (52) ist; und
die Riegelhakeneinstellbaugruppe (38) in einer Eingriffskonfiguration, wobei die ein oder mehreren Indexiermerkmale (96) mit der Vielzahl von Indexierhohlräumen (114) in Eingriff sind, und in einer außer-Eingriff-Konfiguration, wobei die ein oder mehreren Indexiermerkmale (96) mit der Vielzahl von Indexierhohlräumen (114) außer Eingriff sind, anordenbar ist;
**dadurch gekennzeichnet, dass** jeder Indexierhohlraum (114) zur Mutterbohrung (110) hin offen ist.

2. Riegelhakeneinstellbaugruppe (38) nach Anspruch 1, wobei der Lagerblock (50) einen Führungszapfen (94) beinhaltet, der von der zweiten Seitenfläche (102) nach außen vorsteht und an die Lagerblockbohrung (98) angrenzt, und die Mutter (52) eine Führungszapfenbohrung (112) beinhaltet, die in der ersten Axialendfläche (104) angeordnet ist und an die Mutterbohrung (110) angrenzt, wobei die Führungszapfenbohrung (112) dazu ausgelegt ist, den Führungszapfen (94) aufzunehmen.

3. Riegelhakeneinstellbaugruppe (38) nach Anspruch 2, wobei die Vielzahl von Indexiermerkmalen (96) an den Führungszapfen (94) angrenzt.

4. Riegelhakeneinstellbaugruppe (38) nach einem der Ansprüche 1 bis 3, wobei der Lagerblock (50) eine Hülse (90) beinhaltet, die von der ersten Seitenfläche (100) nach außen vorsteht, und die Lagerblockbohrung (98) sich durch die Hülse (90) erstreckt, wobei die Hülse (90) dazu ausgelegt ist, innerhalb der Vorderwandöffnung (72) aufnehmbar zu sein.

5. Riegelmechanismus (34), umfassend:
ein Riegelgehäuse (36);
einen Riegelhalter (40); und
die Riegelhakeneinstellbaugruppe (38) nach Anspruch 1 oder 2, wobei die Baugruppe ferner ein Federelement (54) umfasst, wobei das Federelement (54) in dem Vorderhohlraum (70) des Riegelrahmens (44) angeordnet ist und der Schaft (84) des Hakenelements (48) sich durch das Federelement (54) erstreckt.

6. Riegelmechanismus (34) nach Anspruch 5, wobei die ein oder mehreren Indexiermerkmale (96) zur radialen Ausrichtung mit der Vielzahl von Indexierhohlräumen (114) angeordnet sind.

7. Riegelmechanismus (34) nach Anspruch 5 oder 6, wobei die Vielzahl von Indexierhohlräumen (114) dazu ausgelegt ist, mit den ein oder mehreren Indexiermerkmalen (96) zusammenzupassen.

8. Riegelmechanismus (34) nach Anspruch 7, wobei die Passungskonfiguration zwischen den Indexierhohlräumen (114) und den ein oder mehreren Indexiermerkmalen (96) es ermöglicht, dass die Riegelhakeneinstellbaugruppe (38) durch Drehen der Mutter (52) von der Eingriffskonfiguration in die außer-Eingriff-Konfiguration bewegt wird.

9. Riegelmechanismus (34) nach einem der Ansprüche 5 bis 8, wobei der Riegelrahmen (44) eine Oberwand (58) und eine Unterwand (60) beinhaltet, wobei die Vorderwand (56) sich zwischen der Oberwand (58) und der Unterwand (60) erstreckt und die Innenwand (66) sich zwischen der Oberwand (58) und der Unterwand (60) erstreckt und der Vorderhohlraum (70) durch die Vorderwand (56), die Oberwand (58), die Unterwand (60) und die Innenwand (66) definiert ist und die Innenwand (66) eine Innenwandöffnung (74) beinhaltet, die mit der Vorderwandöffnung (72) ausgerichtet ist.

10. Riegelmechanismus (34) nach einem der Ansprüche 5 bis 9, wobei die Mutter (52) eine Außenradialfläche (108) und eine Vielzahl von Eingriffsausnehmungen (116) beinhaltet, die in der Außenradialfläche (108) angeordnet sind.

11. Luftfahrzeuggondel (24), umfassend:
eine Lüfterhaube (28) aufweisend ein erstes Lüfterhaubenelement (28A) und ein zweites Lüfterhaubenelement (28B); und
einen Riegelhalter (40), der an dem zweiten Lüfterhaubenelement (28B) befestigt ist;
mindestens eine Riegelhakeneinstellbaugruppe (38) nach einem der Ansprüche 1 bis 4, wobei die Riegelhakeneinstellbaugruppe an dem ersten Haubenelement befestigt ist.

## Revendications

1. Ensemble de réglage de crochet de loquet (38), comprenant :
un cadre de loquet (44) ayant une paroi avant (56) ayant une ouverture de paroi avant (72), une paroi intérieure (66) et une cavité avant (70) disposée entre la paroi avant (56) et la paroi intérieure (66) ;
une poignée de loquet montée pivotante (46) qui s'étend dans le sens de la longueur entre une première extrémité et une seconde extrémité en communication avec le cadre de loquet (44) ;
un élément crochet (48) ayant une tige au moins partiellement filetée (84) ;
un bloc de palier (50) ayant une première surface latérale (100) et une seconde surface latérale (102), la première surface latérale (100) étant opposée à la seconde surface latérale (102), un ou plusieurs éléments d'indexage (96) et un alésage de bloc de palier (98), dans lequel les un ou plusieurs éléments d'indexage (96) font saillie vers l'extérieur de la seconde surface latérale (102), et l'alésage de bloc de palier (98) s'étend entre la première surface latérale (100) et la seconde surface latérale (102), et les un ou plusieurs éléments d'indexage (96) sont disposés adjacents à l'alésage de bloc de palier (98) ; et
un écrou (52) ayant une première surface d'extrémité axiale (104) et une seconde surface d'extrémité axiale (106), un alésage d'écrou (110) qui s'étend à travers la première surface d'extrémité axiale (104) et la seconde surface d'extrémité axiale (106), et au moins une partie de l'alésage d'écrou (110) est configurée pour une mise en prise filetée avec la tige d'élément crochet (84), et une pluralité de cavités d'indexage (114) disposées dans la première surface d'extrémité axiale (104) adjacentes à l'alésage d'écrou (110) ; et
dans lequel le bloc de palier (50) et l'écrou (52) sont disposés dans la cavité avant (70) du cadre de loquet (44), et la tige (84) de l'élément crochet (48) s'étend à travers l'ouverture de paroi avant (72), le bloc de palier (50) et l'écrou (52), et la tige (84) est en prise filetée avec l'écrou (52) ; et
l'ensemble de réglage de crochet de loquet (38) peut être disposé dans une configuration en prise dans laquelle les un ou plusieurs éléments d'indexage (96) sont en prise avec la pluralité de cavités d'indexage (114), et dans une configuration hors de prise dans laquelle les un ou plusieurs éléments d'indexage (96) sont hors de prise d'avec la pluralité de cavités d'indexage (114) ;
**caractérisé en ce que** chaque cavité d'indexage (114) est ouverte sur l'alésage d'écrou (110).

2. Ensemble de réglage de crochet de loquet (38) selon la revendication 1, dans lequel le bloc de palier (50) comporte un bossage pilote (94) s'étendant vers l'extérieur à partir de la seconde surface latérale (102) contiguë à l'alésage de bloc de palier (98), et l'écrou (52) comporte un alésage de bossage pilote (112) disposé dans la première surface d'extrémité axiale (104) contiguë à l'alésage d'écrou (110), dans lequel l'alésage de bossage pilote (112) est configuré pour recevoir le bossage pilote (94).

3. Ensemble de réglage de crochet de loquet (38) selon la revendication 2, dans lequel la pluralité d'éléments d'indexage (96) sont contigus au bossage pilote (94).

4. Ensemble de réglage de crochet de loquet (38) selon l'une quelconque des revendications 1 à 3, dans lequel le bloc de palier (50) comporte un manchon (90) s'étendant vers l'extérieur à partir de la première surface latérale (100) et l'alésage de bloc de palier (98) s'étend à travers le manchon (90), dans lequel le manchon (90) est configuré pour pouvoir être reçu dans l'ouverture de paroi avant (72).

5. Mécanisme de loquet (34), comprenant :
un logement de loquet (36) ;
une gâche de loquet (40) ; et
l'ensemble de réglage de crochet de loquet (38) selon la revendication 1 ou 2, l'ensemble comprenant en outre un élément ressort (54), dans lequel l'élément ressort (54) est disposé dans la cavité avant (70) du cadre de loquet (44), et la tige (84) de l'élément crochet (48) s'étend à travers l'élément ressort (54).

6. Mécanisme de loquet (34) selon la revendication 5, dans lequel les un ou plusieurs éléments d'indexage (96) sont disposés pour un alignement radial avec la pluralité de cavités d'indexage (114).

7. Mécanisme de loquet (34) selon la revendication 5 ou 6, dans lequel la pluralité de cavités d'indexage (114) sont configurées pour s'emboîter avec les un ou plusieurs éléments d'indexage (96).

8. Mécanisme de loquet (34) selon la revendication 7, dans lequel la configuration d'emboîtement entre les cavités d'indexation (114) et les un ou plusieurs éléments d'indexage (96) permet à l'ensemble de réglage de crochet de loquet (38) d'être entraîné en mouvement de ladite configuration en prise à ladite configuration hors de prise par rotation de l'écrou (52).

9. Mécanisme de loquet (34) selon l'une quelconque des revendications 5 à 8, dans lequel le cadre de loquet (44) comporte une paroi supérieure (58) et une paroi inférieure (60), dans lequel la paroi avant (56) s'étend entre la paroi supérieure (58) et la paroi inférieure (60), et la paroi intérieure (66) s'étend entre la paroi supérieure (58) et la paroi inférieure (60), et la cavité avant (70) est définie par la paroi avant (56), la paroi supérieure (58), la paroi inférieure (60) et la paroi intérieure (66), et la paroi intérieure (66) comporte une ouverture de paroi intérieure (74) alignée avec l'ouverture de paroi avant (72).

10. Mécanisme de loquet (34) selon l'une quelconque des revendications 5 à 9, dans lequel l'écrou (52) comporte une surface radiale externe (108) et une pluralité de cavités de mise en prise (116) disposées dans la surface radiale externe (108).

11. Nacelle d'aéronef (24), comprenant :
un capot de ventilateur (28) ayant un premier élément de capot de ventilateur (28A) et un second élément de capot de ventilateur (28B) ; et
une gâche de loquet (40) fixée au second élément de capot de ventilateur (28B) ;
au moins un ensemble de réglage de crochet de loquet (38) selon l'une quelconque des revendications 1 à 4, l'ensemble de réglage de crochet de loquet étant fixé au premier élément de capot.
